(19) Europäisches Patentamt
European Patent Office
Office européen des brevets

(11) **EP 4 127 848 B1**

(12) **EUROPÄISCHE PATENTSCHRIFT**

(45) Veröffentlichungstag und Bekanntmachung des Hinweises auf die Patenterteilung:
**13.11.2024 Patentblatt 2024/46**

(21) Anmeldenummer: **21718026.4**

(22) Anmeldetag: **23.03.2021**

(51) Internationale Patentklassifikation (IPC):
**G05B 23/02** (2006.01)   **G06N 3/08** (2023.01)

(52) Gemeinsame Patentklassifikation (CPC):
**G05B 23/024; G06N 3/088; G06N 20/00;**
G05B 2219/21002; G05B 2219/25255

(86) Internationale Anmeldenummer:
**PCT/EP2021/057393**

(87) Internationale Veröffentlichungsnummer:
**WO 2021/191190 (30.09.2021 Gazette 2021/39)**

(54) **VERFAHREN UND SYSTEM ZUR DIAGNOSE VON MELDUNGEN**

METHOD AND SYSTEM FOR DIAGNOSING OF MESSAGES

PROCÉDÉ ET SYSTÈME DE DIAGNOSTIC DE MESSAGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.03.2020 EP 20165820**

(43) Veröffentlichungstag der Anmeldung:
**08.02.2023 Patentblatt 2023/06**

(73) Patentinhaber: **Siemens Aktiengesellschaft**
**80333 München (DE)**

(72) Erfinder:
• **BIERWEILER, Thomas**
**76131 Karlsruhe (DE)**
• **JOHN, Jean Pascal**
**76137 Karlsruhe (DE)**
• **LABISCH, Daniel**
**76149 Karlsruhe (DE)**

(74) Vertreter: **Siemens Patent Attorneys**
**Postfach 22 16 34**
**80506 München (DE)**

(56) Entgegenhaltungen:
EP-A1- 3 454 154    EP-A2- 2 696 251
US-B2- 7 388 482

• **"Kommunikation und Bildverarbeitung in der Automation : Technologies for Intelligent Automation : Ausgewählte Beiträge der Jahreskolloquien KommA und BVAu 2018"**, vol. 8, 1 January 2018, SPRINGER BERLIN HEIDELBERG, Berlin, Heidelberg, ISBN: 978-3-662-59895-5, ISSN: 2522-8579, article ALEXANDER VON BIRGELEN ET AL: "Anomaly Detection and Localization for Cyber-Physical Production Systems with Self-Organizing Maps : Intelligent Methods for the Factory of the Future", pages: 55 - 71, XP055729182, DOI: 10.1007/978-3-662-57805-6_4
• **Y. S. NG ET AL: "A self-organizing map approach for process fault diagnosis during process transitions"**, AICHE ANNUAL MEETING, 12 November 2004 (2004-11-12), pages 1 - 12, XP055342478

**Beschreibung**

Die Erfindung betrifft ein Verfahren zur Diagnose von Meldungen, die während eines Betriebs einer technischen Anlage generiert werden, wobei der innerhalb der Anlage ablaufende technische Prozess mittels eines Prozessleitsystems gesteuert wird. Ferner betrifft die Erfindung ein entsprechendes System zur Diagnose von Meldungen eines Prozessleitsystems mit dem dazugehörigen Computerprogramm.

In fertigungstechnischen und prozesstechnischen Anlagen werden technische Abläufe mittels eines Automatisierungssystems gesteuert. Der Ablauf der einzelnen Produktionsschritte oder des verfahrenstechnischen Prozesses kann sowohl produktionsbedingten als auch durch Fehler innerhalb der technischen Anlage bedingten Schwankungen unterliegen. Für einen sicheren Betrieb und die Erfüllung der qualitativen Ziele ist daher eine Überwachung der Abläufe notwendig. Dabei müssen ungewöhnliche, fehlerbedingte Abweichungen von normalen Produktions- oder Prozessschwankungen unterschieden werden. Solche ungewöhnlichen, fehlerbedingte Abweichungen werden als Anomalie bezeichnet.

Das Vorliegen einer Anomalie ist prinzipiell eine binäre Aussage, die jedoch häufig mit mindestens einem weiteren Wert kombiniert wird, wie beispielsweise einem Wert, der die Stärke der Abweichung vom Normal quantifiziert.

Liegt eine Anomalie vor, reicht das skalare Wissen darüber jedoch nicht aus, um diese zu verstehen und nächste Schritte zu planen. Wichtig ist die Bereitstellung eines Symptoms. Symptome sind Indikatoren oder Anzeichen für eine Abweichung vom Normalzustand. In der VDI/VDE-Richtlinie 2651, Blatt 1, "Plant Asset Management (PAM) in der Prozessindustrie" vom Mai 2017 ist auf Seite 19 der Begriff eines Symptoms erklärt: Symptome werden demgemäß aus Merkmalen (= charakteristische Größen wie bspw. Druck, Temperatur oder Füllstand) durch Vergleich mit Bezugsgrößen abgeleitet. So ist z. B. das Merkmal "Wicklungstemperatur eines Motors" alleine noch kein Symptom, weil der Absolutwert nichts über eine mögliche Überlastung aussagt. Erst der Vergleich mit dem maximal zulässigen Wert oder einem Bezugswert (z. B. Nennwert) liefert eine Aussage zu einer Abweichung. Symptome können daher z.B. durch Vergleich mit Soll-, Grenz-, Nenn- oder Erfahrungswerten, durch Trendüberwachung oder Vergleich mit Modellen abgeleitet werden.

Eine nachfolgende Diagnose oder Ursachenermittlung wertet die Symptome als Ergebnisse der Überwachung aus. Es werden die Einflüsse oder Prozessvariablen ermittelt, die das Symptom auslösen.

Prozessmeldungen, die vom Automatisierungssystem generiert werden, machen den Operator in prozesstechnischen Anlagen auf fehlerbedingte Abweichungen vom Normalbetrieb aufmerksam. Neben Bedieneingriffen eines Benutzers (Bedienmeldungen) charakterisieren Prozessmeldungen insbesondere ein Verlassen eines Normalbereichs einzelner Prozessvariablen (Warnungen), ein Erreichen kritischer Werte (Alarme) sowie Diagnoseinformationen eines Automatisierungssystems (Systemmeldungen). Insbesondere Alarmmeldungen erfordern aufgrund ihrer Kritikalität ein sofortiges, zumindest zeitnahes, Handeln des Operators einer technischen Anlage, um Qualitätseinbußen, Produktionsausfälle, Anlagenausfälle und, im schlimmsten Fall, Unfälle mit Personenbeteiligung zu verhindern.

Demnach stellen Alarme in verfahrenstechnischen Anlagen eines der wichtigsten Hilfsmittel dar, um den Prozess durch einen Operator zu überwachen und Abweichungen vom Normalbetrieb zu erkennen. Alarme werden üblicherweise als feste oder variable Grenzwerte auf gemessene oder abgeleitete (aus anderen gemessenen Größen berechnete) Größen implementiert. Wird der Grenzwert verletzt, so wird der Operator mittels eines Alarms darauf hingewiesen.

In vielen Fällen ist jedoch die Information des Alarms allein noch nicht ausreichend, um die Abweichung einer Größe von Ihrem Sollwert im Detail nachvollziehen zu können bzw. reicht das Auftreten eines Alarms noch weniger aus, um die Ursache für die Abweichung einer Größe von ihrem Normalwert zu kennen. Erschwerend löst ein Fehlerfall oft mehrere Alarme aus, was die Anforderung, zeitnah eine korrekte Reaktion zu identifizieren, erschwert. Ein falsches Eingreifen des Operators kann die Abweichung einer Größe von ihrem Normalwert sogar im schlimmsten Fall verstärken und zu einer Katastrophe führen.

Aus diesem Grund muss der Operator zuerst analysieren, was eine Prozessmeldung ausgelöst hat, um geeignete Maßnahmen ableiten zu können. Für die Ursachensuche muss der Operator verschiedene Messgrößen, Zeitverläufe und KPIs analysieren. Diese sind jedoch je nach Meldung und Ursache verschieden, sodass es nicht möglich ist, die jeweils relevanten schon vorab einem Alarm zuzuordnen. Die Navigation auf der Operator-Station zu den verschiedenen Werten in unterschiedlichen Übersichtsdarstellungen kostet Zeit, zudem kann es auch zu Verwechslungen der Komponenten oder Signale kommen. Je nach Problem ist jedoch eine detaillierte Analyse unumgänglich, insbesondere bei einer erhöhten technischen Abhängigkeit zwischen verknüpften Teilprozessen. Es wäre demnach besonders wünschenswert, wenn einzelne Signale und/oder Prozessvariablen als Ursache für die Auslösung einer Meldung bestimmt werden könnten.

Aus der EP 2 696 251 A2 ist ein Verfahren zum Überwachen einer rotierenden Maschine, insbesondere einer Windenergieanlage, die mit einer Mehrzahl von Sensoren zum Erfassen von physikalischen Parametern versehen ist und in mehreren variablen Betriebszuständen betrieben wird. In einer Referenz - SOM (= selbstorganisierenden Karte) sind alle relevanten Parameter des Systems aufgenommen und mittels des Quantisierungsfehlers bezüglich der Referenz-SOM lässt sich feststellen, dass ein Fehler im System vorliegt. Um festzustellen, wo der Fehler liegt bzw. welcher Art der Fehler ist, wird eine Diagnose-SOM mit einer Teilmenge der in der Überwachungsbetriebsphase gewonnenen Sensordaten erstellt, welche dann mit Hilfe eines Regelsatzes grafisch ausgewertet wird, um eine Fehlerursache zu identifizieren. Falls die Identifizierung einer Fehlerursache aus der Auswertung der ersten Diagnose-SOM nicht möglich ist, wird mindestens eine zweite Diagnose-SOM mit einer anderen Teilmenge der in der Überwachungs-Betriebsphase gewonnenen Sensordaten hinsichtlich Messzeitpunkten und/oder Zahl der Sensoren und optional mit in der Referenz-Betriebsphase gewonnenen Sensordaten erstellt und ausgewertet. Das Verfahren ist sehr aufwändig und ist insbesondere nicht mit einzelnen Prozessmeldungen gekoppelt.

Aus dem Fachartikel "Anomaly Detection and Localization for Cyber-Physical Production Systems with Self-Organizing Maps: Intelligent Methods for the Factory of the Future" von Alexander von Birgelen et. al aus "Kommunikation und Bildverarbeitung in der Automation : Technologies for Intelligent Automation : Ausgewählte Beiträge der Jahreskolloquien KommA und BVAu 2018", 1. Januar 2018 (2018-01-01), Springer Berlin, Heidelberg, Berlin, Heidelberg, XP055729182, ISSN: 2522-8579, ISBN: 978-3-662-59895-5, Bd. 8, Seiten 55-71, DOI: 10.1007/978-3-662-57805-6_4, ist ebenfalls eine datenbasierte Anomalie-Erkennung und -Lokalisierung mittels selbstorganisierenden Karten bekannt. Eine Diagnose von Prozessmeldungen ist allerdings nicht von dem Artikel umfasst.

Es ist daher die Aufgabe der vorliegenden Erfindung, ein Verfahren zur Diagnose von Prozessmeldungen eines Prozessleitsystems einer technischen Anlage und ein entsprechend geeignetes System anzugeben, die sich durch eine verbesserte Ursachenanalyse bei auftretenden Meldungen auszeichnen. Davon ausgehend liegt der Erfindung die Aufgabe zugrunde, ein geeignetes Computerprogramm anzugeben.

Diese Aufgabe wird durch die Merkmale der unabhängigen Patentansprüche 1 und 8 gelöst. Außerdem wird die Aufgabe gelöst durch ein Computerprogramm nach Anspruch 16 und ein Computerprogrammprodukt nach Anspruch 17. Ausgestaltungen der Erfindung, die einzeln oder in Kombination miteinander einsetzbar sind, sind Gegenstand der Unteransprüche.

Die Erfindung schlägt ein verbessertes Verfahren zur Diagnose von Meldungen vor, die während eines Betriebs einer technischen Anlage in einem Prozessleitsystem generiert werden. Erfindungsgemäß verwendet das Verfahren zur Bestimmung einer Diagnoseaussage selbstorganisierende Karten, anhand derer das Normalverhalten des Anlagenbetriebs abbildbar und somit bestimmbar ist. Durch eine rein datengetriebene Ermittlung des vom Normalbetrieb der Anlage abweichenden Verhaltens der jeweils betrachteten Datensätze bestimmter Zeitintervalle können Ursachen, die zur Auslösung einer Meldung und damit zum abweichenden Verhalten des Anlagenbetriebs führen, vorteilhaft genauer und zuverlässiger bestimmt werden.

"Selbstorganisierende Karten", Kohonenkarten oder Kohonennetze (nach Teuvo Kohonen; englisch self-organizing map, SOM bzw. self-organizing feature map, SOFM) sind im Stand der Technik hinreichend bekannt. Laut Wikipedia vom 20.02.2020 bezeichnen selbstorganisierende Karten eine Art von künstlichen neuronalen Netzen. Sie sind als unüberwachtes Lernverfahren ein leistungsfähiges Werkzeug des Data-Mining. Ihr Funktionsprinzip beruht auf der biologischen Erkenntnis, dass viele Strukturen im Gehirn eine lineare oder planare Topologie aufweisen. Auch aus dem Aufsatz "Monitoring of Complex Industrial Processes based on Self-Organising Maps and Watershed Transformations" von Christian W. Frey, Fraunhofer Institute IOSB, gefunden im Internet am 11.03.2016 unter der Adresse www.iosb.fraunhofer.de/servlet/is/22544/Paper_ICIT2012_Frey.p df?command=downloadContent&filename=Paper_ICIT2012_Frey.pdf, ist ein Diagnoseverfahren zur Überwachung komplexer industrieller Prozesse bekannt, in welchem eine selbstorganisierende Karte anhand von Prozessvariablen, das heißt anhand der erfassten Werte von Messgrößen und der an den Prozess ausgegebenen Werte der Stellgrößen, für ein fehlerfreies Verhalten des Prozesses trainiert wird. Anhand der gemäß obigem Aufsatz vorbestimmten selbstorganisierenden Karte wird das spätere Betriebsverhalten mit dem erlernten fehlerfreien Verhalten verglichen. Auf diese Weise wird ein abweichendes Verhalten erkannt, das anschließend auf Ursachen und mögliche Fehler beim Betrieb des Prozesses analysiert werden kann.

Auch aus der EP 3 279 756 B1 ist eine Diagnoseeinrichtung und ein Verfahren zur Überwachung des Betriebs einer technischen Anlage bekannt, in welchem bei einer Schrittkettensteuerung zuverlässige Diagnoseaussagen durch die Verwendung einer oder mehrerer selbstorganisierender Karten gewonnen werden.

Vor Einsatz einer selbstorganisierenden Karte muss diese mit so genannten Gut-Daten eingelernt sein. In einem automatischen Lernvorgang werden für jeden Knoten der selbstorganisierenden Karte im Datenspeicher mehrere, einen fehlerfreien Betrieb der Anlage kennzeichnende Datensätze abgespeichert und anhand dieser Datensätze durch das Lernverfahren die n-Tupel mit den Werten der Prozessvariablen für fehlerfreien Betrieb für die Knoten der Karte berechnet und an diesen abgelegt, das heißt den Knoten zugeordnet, abgespeichert. Die auf diese Weise vorbestimmte Karte kann unmittelbar für weitere Analysen verwendet werden. Zum Einlernen der selbstorganisierenden Karte werden Werte der Prozessvariablen eines normalen, fehlerfreien Betriebs als Trainingsdaten genutzt. Die selbstorganisierende Karte speichert beim Einlernen an jedem Knoten typische Werte der Prozessvariablen für den Normalbetrieb als Gut-Werte ab. Zu Beginn des Einlernverfahrens kann beispielsweise eine Karte der Größe 8 x 12 Knoten verwendet werden. Selbstverständlich sind auch davon abweichende Größen verwendbar. Nach dem Einlernen können die Trainingsdaten zur Überprüfung der Kartengröße genutzt werden. Die neue Art der Diagnose erfordert somit in vorteilhafter Weise kaum Kenntnisse des Bedieners über die zu überwachende Anlage und ist praktisch universell anwendbar. Weichen im Diagnosebetrieb Werte der Prozessvariablen von den an den Knoten der zuvor eingelernten selbstorganisierenden Karte abgespeicherten Gut-Werten zu sehr ab, so stellt dies ein Indiz für einen Fehler in der überwachten Anlage dar. Erst für die sich anschließende Analyse der Fehlerursache werden eventuell genauere Kenntnisse über den jeweils auf der überwachten Anlage ablaufenden Prozess benötigt.

Dies macht sich die Erfindung zur Meldungsdiagnose zu Nutze:

Dazu werden in einem ersten Schritt die Datensätze der Prozessvariablen des aktuellen Zeitintervalls, in dem die Meldung aufgetreten ist, dahingehend untersucht, in welchem Bereich der SOM sie sich befinden, d.h. wo im Vergleich zum Normalbetrieb, der ja durch die Knoten der SOM charakterisiert ist, sich die aktuellen Datensätze befinden. Dies geschieht durch die Bestimmung des kleinsten Abstands zwischen den Datensätzen des aktuellen Zeitintervalls und den Datensätzen aller Knoten der selbstorganisierenden Karte.

Das mathematische Abstandsmaß ist hierbei beliebig wählbar. So können für den Abstand zwischen zwei Punkten beispielsweise ein kartesischer Abstand oder eine Manhattan Distanz verwendet werden.

Der aus dieser Berechnung resultierende Knoten wird nun als Referenz für die anschließende Symptombestimmung ausgewählt. Dieser Referenz-Knoten wird häufig auch als Sieger-Neuron oder Gewinnerknoten bezeichnet, da er dem aktuellen Normalbetrieb der Anlage entsprechen würde, d.h. einem fehlerfreien Betrieb. Das für das aktuelle Zeitintervall relevante Symptom wird bestimmt, indem Differenzen aus den Datensätzen des aktuellen Zeitintervalls zu dem zuvor bestimmten Referenz-Knoten gebildet werden, wobei nur die Differenzen von Prozessvariablen berücksichtigt werden, die einen vorgegebenen Schwellwert überschreiten. Die Prozessvariablen, die an den zuvor bestimmten Symptomen beteiligt sind, werden ausgegeben. Das erfindungsgemäße Verfahren in dieser Ausführung ermöglicht es demnach, die Prozessvariablen zu bestimmen, die charakteristisch für den aktuellen Anlagenzustand sind und unterstützt den Anlagenfahrer bei der Diagnose einer Prozessmeldung. Der gleiche Vorteil gilt für eine entsprechendes System zur Diagnose von Meldungen eines Prozessleitsystems einer technischen Anlage, wobei das System zumindest einen Datenspeicher, in welchem zumindest ein den Betrieb der Anlage kennzeichnender Datensatz mit Werten von Prozessvariablen abspeicherbar ist, und zumindest eine Auswerteeinrichtung umfasst und die Auswerteeinrichtung dazu ausgebildet ist, das Verfahren gemäß der weiter oben beschriebenen Ausführungsform durchzuführen.

Das erfindungsgemäße Verfahren ist in besonders bevorzugter Weise für kontinuierliche Prozesse geeignet, da sich bei diesen bestimmte Arbeitspunkte des Normalbetriebs in den Knotenpunkten der selbstorganisierenden Karte widerspiegeln.

Bei dem Begriff System kann es sich sowohl um ein Hardwaresystem wie einem Computersystem bestehend aus Servern, Netzwerken und Speichereinheiten als auch um ein Softwaresystem wie einer Softwarearchitektur oder ein größeres Softwareprogramm handeln. Auch eine Mischung aus Hardware und Software ist denkbar, beispielsweise eine IT-Infrastruktur wie eine Cloud-Struktur mit ihren Services. Bestandteile einer solchen Infrastruktur sind üblicherweise Server, Speicher, Netzwerke, Datenbanken, Software-Anwendungen und -dienste, Datenverzeichnisse und Datenverwaltungen. Insbesondere virtuelle Server gehören ebenso zu einem System dieser Art.

Zusätzlich zu den Datensätzen der Prozessvariablen des aktuellen Zeitintervalls, in dem die Meldung aufgetreten ist, wird überprüft, wie oft die Meldung in der Vergangenheit aufgetreten ist, wodurch bei der Symptombestimmung auch historische Datensätze von historischen Zeitintervallen, die dieselbe Meldung enthalten, berücksichtigt werden. In diesem Fall werden in der selbstorganisierenden Karte durch Bestimmung der kleinsten Abstände zwischen den Datensätzen der Vergangenheit und den Datensätzen der Knoten mehrere Gewinner-Knoten identifiziert, welche einem fehlerfreien Betrieb der Anlage entsprechen. Entsprechend werden zusätzlich auch historische Symptome bestimmt, indem ferner Differenzen aus den Datensätzen der historischen Zeitintervalle zu den zuvor bestimmten Gewinner-Knoten gebildet werden, wobei nur die Differenzen von Prozessvariablen berücksichtigt werden, die einen vorgegebenen Schwellwert überschreiten. Die Prozessvariablen, die an den zuvor bestimmten historischen Symptomen beteiligt sind, werden ausgegeben. Durch die Berücksichtigung von historischen Zeitintervallen mit derselben Meldung wird die Auswahl der Prozessvariablen, die im Zusammenhang mit einer Meldung, insbesondere mit einem Alarm, stehen, robuster. Werden beispielsweise im Zusammenhang mit einer Meldung sowohl für das aktuelle Zeitintervall als auch für die historischen Zeitintervalle nach der Symptombestimmung die gleichen Prozessvariablen angezeigt, so kann der Anlagenfahrer davon ausgehen, dass stets das gleiche Zusammenspiel dieser Prozessvariablen zu der angezeigten Störung führt.

Die Robustheit der Meldungsdiagnose wird noch weiter erhöht, indem die einzelnen Meldungen noch in Korrelation mit anderen Meldungen betrachtet werden. Nach Auftreten der Meldung wird zunächst bestimmt, ob die Meldung Teil einer Meldungskette ist und wie oft die Meldungskette in der Vergangenheit aufgetreten ist. Im weiteren Verlauf des Verfahrens wird für ein beliebig gewähltes Zeitintervall, welches die Meldungskette enthält, genauso verfahren wie im Falle einer einzelnen Meldung: Nach Bestimmung der Gewinner-Knoten der selbstorganisierenden Karte für die Datensätze der aktuellen und historischen Zeitintervalle, die die Meldungsketten enthalten, werden die aktuellen und historischen Symptome bestimmt und ausgewertet.

Bei Meldungsketten handelt es sich um Meldungen, die häufig in einer bestimmten Reihenfolge oder nach Auftreten wiederkehrender Muster im Meldungsarchiv auftreten. Meldungsketten liefern häufig wertvolle Informationen zum Betriebsverhalten, da häufig ein Ereignis die Folge eines anderen ist. Der Operator kann dann auf dieser Basis und auf Basis des Anlagen- und Prozesswissens besser Entscheidungen über den weiteren Betrieb der Anlage treffen.

Ein automatisches Verfahren zur Erkennung von statistischen Abhängigkeiten zwischen Prozessmeldungen ist beispielsweise aus der EP 3 454 154 A1 bekannt. Dieses Verfahren zur Ermittlung von Meldungsketten ist derart konzipiert, einmalig einen gegebenen Datensatz (z.B. alle Meldungen eines Meldungsarchives innerhalb eines bestimmten Zeitbereichs) zu analysieren und dafür einen in sich geschlossenen Datensatz mit Ergebnissen bestehend aus Tabellen mit Meldungsketten und Matrizen mit den entsprechenden Übergangswahrscheinlichkeiten zwischen bestimmten Meldungen zu generieren.

Die Ermittlung von Meldungsketten kann beispielsweise von einem eigenen Software-Modul übernommen werden. In diesem Fall ist es besonders vorteilhaft, wenn die Auswerteeinheit des erfindungsgemäßen Systems zur Diagnose von Meldungen mit einer Analyseeinrichtung verbunden ist, welche dazu ausgebildet ist, Meldungsketten zu ermitteln und zu analysieren. Alternativ, um beispielsweise vereinfachte Datenstrukturen zu realisieren, kann die Ermittlung von Meldungsketten in die Diagnose von Meldungen integriert werden.

Sind die Symptome bei allen Zeitpunkten der Meldungskette oder der betrachteten Zeitintervalle sehr ähnlich, so kann die Vereinigungsmenge der an den Symptomen beteiligen Prozessvariablen zusammen mit dem aktuellen Symptom visualisiert werden. Bei einer größeren Anzahl von unterschiedlichen Prozessvariablen als Ergebnis aus der Ermittlung der aktuellen und historischen Symptome empfiehlt es sich daher, eine Clusterung der Symptome durchzuführen, um so eine Reduzierung der an den Symptomen beteiligten Prozessvariablen zu erzielen. In einer weiteren vorteilhaften Ausgestaltung der Erfindung wird daher eine Clusterung der Symptome durchgeführt und anschließend derjenige Cluster ausgewählt, der beispielsweise ein aktuelles Symptom enthält, und die Prozessvariablen ausgegeben werden, die an dem aktuellen Symptom beteiligt sind. Dabei kommen beliebige bekannte Verfahren zur Clusterung in Frage.

Im Rahmen einer weiteren bevorzugten Weiterbildung des erfindungsgemäßen Verfahrens und Systems sind jegliche Zeitintervalle variabel bestimmbar oder werden entsprechend der Prozessdynamik eingestellt. Dies erlaubt dem Nutzer der Diagnose-Applikation beliebige Flexibilität bei der Auswertung der Daten. Werden die Zeitintervalle über mehrere Zeiteinheiten wie Sekunden oder Minuten gewählt, so können vorteilhaft Trendverläufe der Prozessvariablen angezeigt werden.

Im Falle von Meldungsketten können die Zeitintervalle in Abhängigkeit von der identifizierten Kette gewählt werden. So kann ein Zeitintervall beispielsweise mit dem Beginn einer Meldungskette, also dem Zeitpunkt der ersten Meldung, anfangen und das Ende des Zeitintervalls mit dem Zeitpunkt der letzten Meldung aufhören. Der Zeitraum der Analyse kann allerdings ebenso vor und nach dem Auftreten der Meldungskette entsprechend der Prozessdynamik erweitert werden (z.B. 10 Minuten vor Beginn der Kette bis 5 Minuten nach Abschluss der Kette).

In einer weiteren bevorzugten Weiterbildung der Erfindung werden Symptome für eine beliebige Auswahl von Zeitpunkten der Zeitintervalle bestimmt. Dies hat den Vorteil, dass weniger Datensätze bei der Symptombestimmung berechnet werden müssen und so eine schnellere Bestimmung erfolgen kann, also Berechnungszeiten verringert werden.

In einer anderen vorteilhaften Variante wird der Schwellwert zur Bestimmung des Symptoms variabel bestimmt. Der Schwellwert zur Bestimmung eines Symptoms gibt an, wie groß zu einem Zeitpunkt die Differenz zwischen einem Datensatz aus dem Zeitintervall der Meldung und dem Datensatz eines Gewinner-Knotens sein darf. Ist der Schwellwert verhältnismäßig klein gewählt, so sind die Datensätze, die im Zusammenhang mit der Meldung stehen, zu ähnlich zu den Gut-Daten, also dem im Knoten der SOM hinterlegten Datensatz für den Normalbetrieb. Die Symptombestimmung ist dann ggfs. nicht aussagekräftig, weil zu geringe Abweichungen vom Normalbetrieb detektiert werden. Ist der Schwellwert zu groß gewählt, werden bei der Symptombildung ggf. zu viele Prozessvariablen berücksichtigt, sodass die Meldungsdiagnose verfälscht wird. Ebenso wie das Erlernen der Knoten der selbstorganisierenden Karte können die Schwellwerte anhand der Datensätze des fehlerfreien Betriebs automatisch ermittelt werden. Dazu können mit den Datensätzen die jeweiligen Gewinner-Knoten ermittelt und die jeweiligen Abstände zwischen den Datensätzen und den zugehörigen Gewinnerknoten bestimmt werden. Als Schwellwert kann dann der sich jeweils zu einem Datensatz ergebende Abstand zu seinem Gewinnerknoten, zur Vermeidung von Fehldiagnosen jeweils erhöht um einen Sicherheitsaufschlag von beispielsweise 5 bis 50%, vorzugsweise 15%, berechnet und auf diese Weise vorbestimmt werden.

In weiteren vorteilhaften Ausführungsvarianten wird die Diagnose von Meldungen verfeinert, indem weitere Informationen mit der Symptombestimmung kombiniert werden. Vorteilhafterweise können parallel noch die Messdaten von vergleichbaren historischen Ereignissen dargestellt werden. Sind für diese Ursachen und Lösungen im Schichtbuch hinterlegt, so steigern diese Informationen den Nutzen für den Anlagenfahrer noch zusätzlich. Die Daten der vergleichbaren Ereignisse an sich lassen beispielsweise Schlüsse zu, wie sich der Prozess weiter verhalten wird. Dies kann bei der Diagnose von Meldungen wie Alarmen ebenfalls sehr hilfreich sein.

In einer Ausführungsvariante ist das erfindungsgemäße System Teil eines Computersystems, welches sich räumlich getrennt vom Standort der technischen Anlage, befindet. Das angeschlossene zweite System, weist dann vorteilhaft die Auswerteeinheit auf, welche auf die Komponenten der technischen Anlage und/oder die damit verbundenen Datenspeicher zugreifen kann, und die ausgebildet ist die Analyseergebnisse zu visualisieren und zu einer Anzeigeeinheit zu übertragen. Auf diese Weise kann zum Beispiel eine Kopplung mit einer Cloud-Infrastruktur erfolgen, was weiterhin die Flexibilität der Gesamtlösung erhöht. Auch lokale Implementierungen auf Computersystemen der technischen Anlage können vorteilhaft sein. So ist eine Implementierung z.B. auf einem Server des Prozessleitsystems insbesondere für sicherheitsrelevante Prozesse besonders geeignet.

Im Folgenden wird die Erfindung anhand der Figuren und anhand eines Ausführungsbeispiels näher beschrieben und erläutert.

Es zeigen

Figur 1    ein Beispiel für eine technische Anlage
Figur 2    ein Beispiel für einen verfahrenstechnischen Prozess

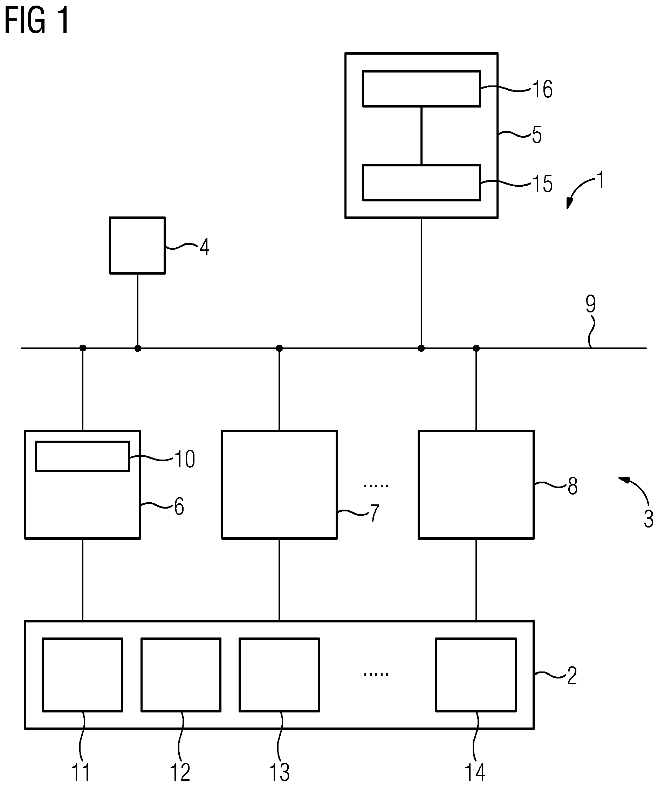

Figur 1 zeigt in vereinfachter schematischer Darstellung als Beispiel eine verfahrenstechnische Anlage 1, in der ein Prozess 2 mittels eines Automatisierungssystems oder Prozessleitsystems 3 gesteuert und/oder überwacht wird. Das Prozessleitsystem 3 enthält ein Planungs- und Engineering-Werkzeug 4, ein Bedien- und Beobachtungsgerät 5 und eine Vielzahl von Automatisierungsgeräten 6, 7, 8, die über ein Bussystem 9 zur Datenkommunikation miteinander verbunden sind. Die Automatisierungsgeräte 6, 7, 8 steuern den verfahrenstechnischen Prozess 2 nach Maßgabe von Automatisierungsprogrammen, von welchen beispielhaft in Figur 1 ein Automatisierungsprogramm 10 eingezeichnet ist. Das Automatisierungsprogramm 10 beispielsweise besteht meist aus mehreren Funktionsbausteinen, welche mit weiteren, im Automatisierungssystem 3 verteilten Funktionsbausteinen in Wechselwirkung stehen können. Zur Steuerung des Prozesses 2 werden vielfältige Feldgeräte 11, 12, 13, 14 zur Prozessinstrumentierung eingesetzt. Messumformer dienen zur Erfassung von Prozessvariablen, wie beispielsweise Temperatur T, Druck P, Durchflussmenge, Füllstand L, Dichte oder Gaskonzentration eines Mediums. Durch Stellglieder kann der Prozessablauf in Abhängigkeit von erfassten Prozessvariablen beispielsweise den Vorgaben des Automatisierungsprogramms 10 entsprechend beeinflusst werden. Als Beispiele für Stellglieder seien ein Regelventil, eine Heizung oder eine Pumpe genannt. Zur Überwachung des Betriebs der Anlage 1 wird eine Vielzahl von Datensätzen, die für den Betrieb der Anlage kennzeichnend sind, erfasst und in einem Datenspeicher 15 abgespeichert. Mittels einer Auswerteeinrichtung 16 werden die Datensätze, die Werte von Prozessvariablen zu bestimmten Zeitpunkten enthalten, ausgewertet, um eine Diagnoseaussage zu bestimmen und einem Bediener anzuzeigen, damit eventuell geeignete Maßnahmen zur Fehlerbehandlung getroffen werden können.

Die Auswerteeinrichtung zur Durchführung des erfindungsgemäßen Verfahrens kann in einer Automatisierungsumgebung vorteilhaft als Software-Funktionsbaustein ausgebildet werden, der in einer grafischen Bedienoberfläche eines Engineering-Systems mit Funktionsbausteinen von Automatisierungsprogrammen verschaltbar und beispielsweise in ein Automatisierungsgerät ladbar ist. Auf einem so genannten Faceplate zur Realisierung einer Mensch-Maschine-Schnittstelle auf einem Bedien- und Beobachtungsgerät 5 der automatisierungstechnischen Anlage werden dann erkannte Abweichungen von Prozessvariablen, die auf einen Fehler in der Anlage hindeuten, zur Anzeige gebracht. Auf der grafischen Benutzeroberfläche des Bedien- und Beobachtungsgerätes können durch einen Bediener, falls gewünscht, Änderungen an der selbstorganisierenden Karte, an den Schwellwerten oder sonstigen Parametern vorgenommen werden.

In besonders vorteilhafter Weise kann das erfindungsgemäße Diagnosesystem zur Überwachung des Betriebs einer technischen Anlage, insbesondere der Datenspeicher und die Auswerteeinrichtung, in einer nicht lokalen Software-Umgebung zur Cloud-basierten Anlagenüberwachung implementiert werden. Daten aus Kundenanlagen werden mit Hilfe von Software-Agenten gesammelt, aggregiert, und an ein Service-Operation-Center geschickt, in welchem sie auf einem Remote-Service-Rechner abgespeichert werden. Dort, in der Cloud-Umgebung, werden sie mit Hilfe von verschiedenen "Data Analytics"-Software-Applikationen halbautomatisch ausgewertet. Bei Bedarf können für den Remote-Service besonders geschulte Experten auf dieser Datenbasis hocheffizient arbeiten. Die Ergebnisse der Datenanalyse können auf einem Monitor des Remote-Service-Rechners angezeigt und/oder auf einem Sharepoint bereitgestellt werden, so dass sie vom Endkunden, das heißt dem Bediener der technischen Anlage, zum Beispiel in einem Browser betrachtet werden können.

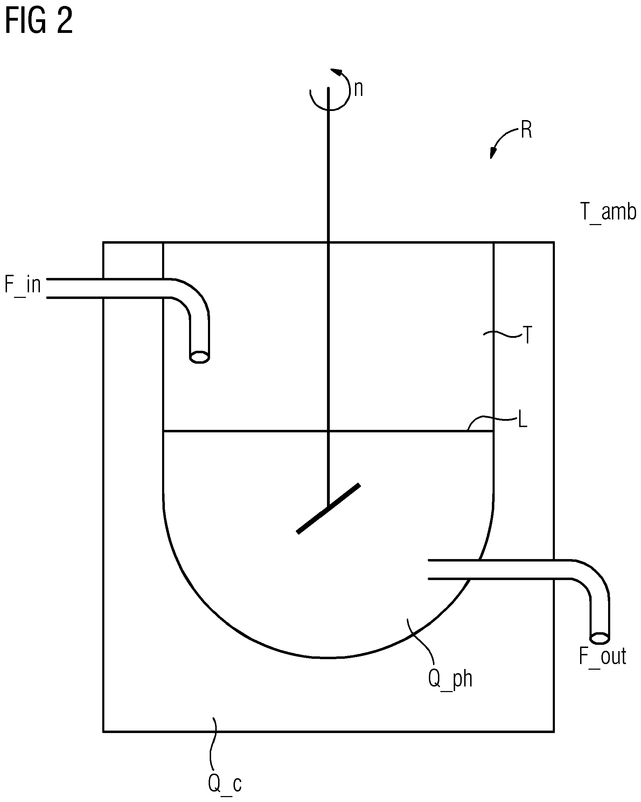

Das erfindungsgemäße Verfahren wird somit bevorzugt in Software oder in einer Kombination Soft-/Hardware implementiert, so dass die Erfindung auch ein Computerprogramm mit durch einen Computer ausführbaren Programmcodeanweisungen zur Implementierung des Diagnoseverfahrens betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm kann, wie oben beschrieben, in einem Speicher eines Automatisierungsgeräts vorgehalten oder in diesen geladen werden, so dass beim Betrieb des Automatisierungsgeräts die Überwachung des Betriebs der technischen Anlage automatisch durchgeführt wird, oder das Computerprogramm kann bei einer Cloud-basierten Überwachung einer technischen Anlage in einem Speicher eines Remote-Service-Rechners vorgehalten oder in diesen ladbar sein. Im Folgenden wird unter Zuhilfenahme von Figur 2 ein Ausführungsbeispiel für die erfindungsgemäße Diagnose von Meldungen eines Prozessleitsystems näher beschrieben.

Betrachtet wird ein Reaktor R, in dem in diesem Ausführungsbeispiel ein flüssiges Gemisch hergestellt wird, wobei eine exotherme Reaktion stattfindet. Dabei wird kontinuierlich Rohmaterial zugeführt und ein Produkt abgeführt. Die Zulaufrate wird mit der Prozessvariablen F_in bezeichnet, die Ablaufrate mit F_out. Der Füllstand L innerhalb des Reaktors R kann während der Reaktion schwanken. Im Reaktor R wird das Gemisch mit der Rührerdrehzahl n gerührt und es findet eine exotherme Reaktion statt. Daher muss der Reaktor gekühlt werden. Die Kühlleistung wird mit Q_c bezeichnet. Die Außentemperatur T_amb und die Temperatur T innerhalb des Reaktors werden kontinuierlich überwacht. Auch der ph-Wert des Gemischs innerhalb des Reaktors wird als Prozessvariable Q_ph überwacht. Bei allen genannten physikalischen Messgrößen handelt es sich um einen Datensatz mit Werten von Prozessvariablen, die mittels entsprechender Sensoren und Messumformer erfasst werden und in einem Datenspeicher abgelegt werden.

Es wird angenommen, dass zur Diagnose des betrachteten Prozesses ein entsprechendes System oder eine Softwarekomponente installiert ist, in der eine selbstorganisierende Karte (SOM) abgebildet ist. Es wird ferner angenommen, dass diese selbstorganisierende Karte mit historischen "Gut-Daten", also mit Trainings-Datensätzen mit Werten von Prozessvariablen, die einen fehlerfreien Betrieb der technischen Anlage kennzeichnen, eingelernt ist. Die SOM speichert beim Einlernen an jedem Knoten typische Werte der Prozessvariablen, die den fehlerfreien Betrieb der technischen Anlage charakterisieren, als Gut-Werte ab. Bei jedem Knoten handelt es sich demnach um n-Tupel mit vorbestimmten Werten von n Prozessvariablen für den fehlerfreien Betrieb.

In dem Ausführungsbeispiel wird nun ferner angenommen, dass beispielsweise auf einem Bildschirm des Prozessleitsystems ein Alarm "Temperatur T im Reaktor zu hoch" angezeigt wird. Für einen realen Prozess mit einer Vielzahl an Prozessvariablen, wäre es sehr unübersichtlich, alle Messgrößen, die mit den Prozessvariablen im Zusammenhang stehen, anzuzeigen. Im Einklang mit dem erfindungsgemäßen Verfahren sollen nun nur solche Messgrößen angezeigt werden, die ursächlich mit dem oder den aufgetretenen Alarm(en) zusammenhängen.

Nach dem Alarm werden ferner die Warnung "Füllstand sehr hoch" und die Information "Druckluftkompressor startet" angezeigt. Nach dem erfindungsgemäßen Verfahren wird nun anhand einer Kettenanalyse zunächst eine Meldungskette (M1, M2) mit M1 = Temperatur T im Reaktor zu hoch" und M2 = "Füllstand im Reaktor sehr hoch" identifiziert. Da der Druckluftkompressor unabhängig vom Prozess startet, sobald die Druckluftversorgung einen gewissen Druck unterschreitet, legt dies nahe, dass die Meldung "Druckluftkompressor startet" irrelevant für die Auswertung ist. Anschließend wird ermittelt, wie oft die Meldungskette (M1, M2) in der Vergangenheit aufgetreten ist. In diesem Ausführungsbeispiel wird angenommen, dass die Meldungskette im vergangenen Jahr 27 Mal aufgetreten ist. Wäre keine Meldungskette erkannt worden, wäre lediglich die Auftretenshäufigkeit des Alarms bestimmt worden. Für alle Zeitintervalle, innerhalb derer die Meldungskette aufgetreten ist, findet nun ein Vergleich mit den historischen Gut-Daten statt. Bei einer Meldungskette kann beispielsweise der Zeitpunkt des Beginns der Meldungskette als Beginn des zu betrachtenden Zeitintervalls festgelegt werden. Generell sind die Zeitintervalle variabel bestimmbar oder werden entsprechend der Prozessdynamik eingestellt. Z.B. kann das Zeitintervall 10 min vor Beginn der Meldungskette bis 5 min nach Abschluss der Kette reichen.

Nun werden für alle Zeitintervalle (hier das aktuelle Zeitintervall t_akt und die 27 historischen Zeitintervalle dti mit i= 27) die i+1 "Siegerknoten" bestimmt, indem beispielsweise der kleinste hier kartesische Abstand zwischen den Datensätzen mit den Werten der Prozessvariablen der i+1=28 Zeitintervalle und den n-Tupeln an den Knoten der SOM bestimmt werden. Die 28 resultierenden Knoten Kresi werden ausgewählt. Anschließend werden das aktuelle und die historischen Symptome bestimmt, indem Differenzen aus den Datensätzen der Zeitintervalle zu den zuvor bestimmten Knoten Kresi gebildet werden, wobei nur die Differenzen von Prozessvariablen berücksichtigt werden, die einen vorgegebenen Schwellwert S_Sym überschreiten. Lassen sich mit dem vorgegebenen Schwellwert die Symptome klar bestimmen, ist keine Reduktion des Schwellwerts notwendig.

In dem betrachteten Fall unterscheiden sich die Symptome der 27 historischen Datensätze, weshalb eine Clusterung durchgeführt wird. Dies führt zu zwei Clustern, was bedeutet, dass es anscheinend zwei Prozess-Situationen gab, die mehrfach historisch aufgetreten sind und sich aufgrund ihrer Symptome unterscheiden:

```
Cluster 1:
```

$\Delta L=+5$, $\Delta T=+10$, $\Delta F\_in=+2$, $\Delta F\_out=0$, $\Delta Q\_c=+3$, $\Delta n=0$, $\Delta Q\_ph=0$, $\Delta T\_amb=0$

Und

```
Cluster 2:
```

$\Delta L=+6$, $\Delta T=+11$, $\Delta F\_in=0$, $\Delta F\_out=-3$, $\Delta Q\_c=+3$, $\Delta n=0$, $\Delta Q\_ph=0$, $\Delta T\_amb=0$

Innerhalb eines Clusters ist das Verhalten jeweils ähnlich, weshalb die Schwerpunkte des jeweiligen Clusters als Symptome angegeben werden. Alternativ könnte auch ein im Cluster enthaltener historischer Fall ausgewählt werden.

Das aktuelle Symptom liegt in diesem Beispiel in Cluster 2. Daher werden die Prozessvariablen des Füllstands L, der Temperatur T im Reaktor, der Ablaufrate F_out und der Kühlleistung Q_c angezeigt. Der Anlagenfahrer kann daraus schließen, dass ein verringerter Ablauf die Ursache für die zu hohe Temperatur im Reaktor darstellt, sodass beispielsweise der Ablauf manuell vergrößert werden muss.

Obwohl die Erfindung im Detail durch das bevorzugte Ausführungsbeispiel näher illustriert und beschrieben wurde, ist die Erfindung nicht durch die offenbarten Beispiele eingeschränkt.

## Patentansprüche

1. Verfahren zur Diagnose von Meldungen (M1, M2, M3, ...),

   die während eines Betriebs einer technischen Anlage (1) generiert werden, wobei ein innerhalb der Anlage (1) ablaufender verfahrenstechnischer Prozess (2) mittels eines Prozessleitsystems (3) gesteuert wird, und den Betrieb der Anlage (1) kennzeichnende Datensätze mit Werten von Prozessvariablen (L, T, F, ...) erfasst und in einem Datenspeicher (15) abgelegt werden,
   wobei anhand der Datensätze und zumindest einer vorbestimmten, so genannten selbstorganisierenden Karte (SOM) Diagnoseaussagen über den Betrieb der Anlage (1) bestimmt werden, und an Knoten (K) der zumindest einen vorbestimmten selbstorganisierenden Karte den Datensätzen entsprechende n-Tupel mit vorbestimmten Werten von Prozessvariablen (L, T, F, ...) für fehlerfreien Betrieb der Anlage (1) abgelegt sind,
   **dadurch gekennzeichnet,**

   - **dass** nach Auftreten einer Meldung (M1) für ein aktuelles Zeitintervall (t_akt), innerhalb dessen die Meldung (M1) aufgetreten ist, der kleinste Abstand zwischen den Datensätzen des aktuellen Zeitintervalls (t_akt) und den Datensätzen aller Knoten (K) der selbstorganisierenden Karte bestimmt wird und der entsprechende Knoten (Kres) ausgewählt wird,
   - **dass** nach Auftreten der Meldung (M1) ferner : eine Anzahl i bestimmt wird, die kennzeichnet, wie oft die Meldung (M1) in der Vergangenheit aufgetreten ist, bestimmt wird, ob die Meldung Teil einer Meldungskette (M1, M2, ...) ist und eine Anzahl j bestimmt wird, die kennzeichnet, wie oft die Meldungskette (M1, M2, ...) in der Vergangenheit aufgetreten ist,
   - **dass** für eine Anzahl der historischen Zeitintervalle (dti), innerhalb derer die Meldung aufgetreten ist und für alle Zeitintervalle (t_akt, dtj), innerhalb derer die Meldungskette aufgetreten ist, jeweils kleinste Abstände zwischen den Datensätzen der Zeitintervalle und den Datensätzen der Knoten (K) der selbstorganisierenden Karte bestimmt werden und entsprechende Knoten (Kres, Kresi, Kresj) ausgewählt werden,
   - **dass** aktuelle und historische Symptome bestimmt werden, indem Differenzen aus den Datensätzen der Zeitintervalle zu den zuvor ausgewählten Knoten (Kres, Kresi, Kresj) gebildet werden, wobei nur die Differenzen von Prozessvariablen berücksichtigt werden, die einen vorgegebenen Schwellwert (S_Sym) überschreiten, und
   - **dass** die Prozessvariablen (L, T, F, ...) ausgegeben werden, die an den zuvor bestimmten aktuellen und historischen Symptomen beteiligt sind.

2. Verfahren nach Anspruch 1, **dadurch gekennzeichnet, dass** eine Clustering der Symptome durchgeführt wird, dass ein Cluster ausgewählt wird, das mindestens ein aktuelles Symptom enthält, und die Prozessvariablen (L, T, F, ...) ausgegeben werden, die an dem mindestens einen, aktuellen Symptom beteiligt sind.

3. Verfahren nach einem der vorhergehenden Ansprüche, **dadurch gekennzeichnet, dass** die Zeitintervalle (t_akt, dti, dtj) variabel bestimmbar sind oder entsprechend einer Prozessdynamik eingestellt werden.

4. Verfahren nach einem der vorhergehenden Ansprüche, **dadurch gekennzeichnet, dass** für eine beliebige Auswahl von Zeitpunkten der Zeitintervalle (t_akt, dti, dtj) Symptome bestimmt werden.

5. Verfahren nach einem der vorhergehenden Ansprüche, **dadurch gekennzeichnet, dass** der Schwellwert (S_Sym) zur Bestimmung des Symptoms variabel bestimmbar ist.

6. Verfahren nach Anspruch 2, **dadurch gekennzeichnet,**

**dass** für Symptome eines Clusters auch die historischen Prozessvariablen (L, T, F, ...) der historischen Zeitintervalle ausgegeben werden, die an den Symptomen in diesem Cluster beteiligt sind.

7. Verfahren nach einem der vorhergehenden Ansprüche, **dadurch gekennzeichnet,**
   **dass** ferner auch Informationen des Schichtbuchs der technischen Anlage mit den Symptomen ausgegeben werden, wobei auch Informationen in einem kurzen Zeitintervall vor und/oder nach den Symptomen berücksichtigt werden.

8. System zur Diagnose von Meldungen (M1, M2, M3, ...) eines Prozessleitsystems (3) einer technischen Anlage (1), wobei das System einen Datenspeicher (15), in welchem zumindest ein den Betrieb der Anlage (1) kennzeichnender Datensatz mit Werten von Prozessvariablen abspeicherbar ist, und eine Auswerteeinrichtung (16) umfasst, wobei die Auswerteeinrichtung (16) dazu ausgebildet ist,

   anhand der Datensätze und zumindest einer vorbestimmten, so genannten selbstorganisierenden Karte (SOM) Diagnoseaussagen über den Betrieb der Anlage (1) zu bestimmen, wobei an Knoten (K) der zumindest einen vorbestimmten, selbstorganisierenden Karte den Datensätzen entsprechende n-Tupel mit vorbestimmten Werten von Prozessvariablen (L, T, F, ...) für fehlerfreien Betrieb der Anlage (1) abgelegt sind,
   **dadurch gekennzeichnet,**
   **dass** die Auswerteeinrichtung (16) mit einer Analyseeinrichtung verbunden ist, welche dazu ausgebildet ist, Meldungsketten zu ermitteln und zu analysieren, und
   **dass** die Auswerteeinrichtung (16) ferner nach Auftreten einer Meldung (M1) zur Durchführung eines Verfahrens gemäß Anspruch 1 ausgebildet ist,
   und dazu ausgebildet ist, die Prozessvariablen (L, T, F, ...), die an den zuvor mittels des Verfahrens nach Anspruch 1 bestimmten Symptomen beteiligt sind, auszugeben.

9. System nach Anspruch 8,
   **dadurch gekennzeichnet,**
   **dass** die Auswerteeinrichtung (16) ferner dazu ausgebildet ist, eine Clusterung der zuvor ermittelten Symptome durchzuführen, und denjenigen Cluster auszuwählen, der mindestens ein aktuelles Symptom enthält, und die Prozessvariablen (L,T, F, ...) auszugeben, die an dem mindestens einen, aktuellen Symptom beteiligt sind.

10. System nach einem der vorhergehenden Ansprüche,
    **dadurch gekennzeichnet,**
    **dass** die Auswerteeinrichtung (16) ferner dazu ausgebildet ist, die Zeitintervalle (t_akt, dti, dtj) variabel zu bestimmen oder entsprechend der Prozessdynamik einzustellen.

11. System nach einem der vorhergehenden Ansprüche,
    **dadurch gekennzeichnet,**
    **dass** die Auswerteeinrichtung (16) ferner dazu ausgebildet ist, für eine beliebige Auswahl von Zeitpunkten der Zeitintervalle (t_akt, dti, dtj) Symptome zu bestimmen.

12. System nach einem der vorhergehenden Ansprüche,
    **dadurch gekennzeichnet,**
    **dass** die Auswerteeinrichtung (16) ferner dazu ausgebildet ist, dass der Schwellwert (S_Sym) zur Bestimmung des Symptoms variabel bestimmbar ist.

13. System nach einem der vorhergehenden Ansprüche,
    **dadurch gekennzeichnet,**
    **dass** die Auswerteeinrichtung (16) ferner dazu ausgebildet ist, für Symptome eines Clusters auch die historischen Prozessvariablen (L, T, F...) der historischen Zeitintervalle auszugeben.

14. System nach einem der vorhergehenden Ansprüche,
    **dadurch gekennzeichnet,**
    **dass** die Auswerteeinrichtung (16) mit einer Komponente verbunden ist, welche das Schichtbuch umfasst, und mit einer Analyseeinrichtung verbunden ist, welche dazu ausgebildet ist, Informationen des Schichtbuchs der technischen Anlage im Zusammenhang mit den Symptomen auszuwerten und an die Auswerteeinrichtung (16) auszugeben.

15. System nach einem der vorhergehenden Ansprüche, **dadurch gekennzeichnet,**

**dass** die Auswerteeinrichtung (16) ferner mit einer Anzeigevorrichtung verbunden ist, welche dazu ausgebildet ist, eine Auswahl der folgenden Informationen anzuzeigen: Meldung oder ermittelte Meldungskette, Auftretenshäufigkeit der Meldung oder Meldungskette, aktuelle und historische Zeitintervalle mit Auswahl an Prozessvariablen, Prozessvariablen die an historischen Symptomen beteiligt sind und/oder Prozessvariablen, die an aktuellen Symptomen beteiligt sind.

16. Computerprogramm mit durch einen Computer ausführbaren Programmcodeanweisungen zur Implementierung des Verfahrens nach einem der Ansprüche 1 bis 7, wenn das Computerprogramm auf einem Computer ausgeführt wird.

17. Computerprogrammprodukt, insbesondere Datenträger oder Speichermedium mit einem durch einen Computer ausführbaren Computerprogramm gemäß Anspruch 16.

**Claims**

1. Method for diagnosing messages (M1, M2, M3, ...) generated during operation of a technical plant (1), wherein a process engineering process (2) running within the plant (1) is controlled by means of a process control system (3) and data sets, characterising the operation of the plant (1), with values of process variables (L, T, F, ...) are recorded and are stored in a data memory (15),

   wherein diagnosis statements about the operation of the plant (1) are determined by means of the data sets and at least one predetermined, so-called self-organising map (SOM), and n-tuples with predetermined values of process variables (L, T, F, ...) for an error-free operation of the plant (1) corresponding to the data sets are stored at nodes (K) of the at least one predetermined self-organising map,
   **characterised in that**

   - following occurrence of a message (M1), the smallest distance between the data sets of the current time interval (t_akt) and the data sets of all nodes (K) of the self-organising map is determined for a current time interval (t_akt), within which the message (M1) has occurred, and the corresponding node (Kres) is selected,
   - furthermore, following the occurrence of the message (M1): a number i is determined, which characterises how often the message (M1) has occurred in the past,

   it is determined whether the message is part of a message chain (M1, M2, ...) and a number j is determined, which characterises how often the message chain (M1, M2, ...) has occurred in the past,

   - the smallest distances between the data sets of the time intervals and the data sets of the nodes (K) of the self-organising map are determined for a number of the historical time intervals (dti), within which the message has occurred, and for all time intervals (t_akt, dtj), within which the message chain has occurred, and corresponding nodes (Kres, Kresi, Kresj) are selected,
   - current and historical symptoms are determined **in that** differences are formed from the data sets of the time intervals for the previously selected nodes (Kres, Kresi, Kresj), wherein only the differences of process variables that exceed a predetermined threshold value (S_Sym) are considered, and
   - the process variables (L, T, F, ...) that are involved in the previously determined current and historical symptoms are issued.

2. Method according to claim 1,
   **characterised in that**

   a clustering of the symptoms is carried out,
   that a cluster containing at least one current symptom is selected, and the process variables (L, T, F, ...) that are involved in the at least one current symptom are issued.

3. Method according to one of the preceding claims,
   **characterised in that**
   the time intervals (t_akt, dti, dtj) can be variably determined or are set according to process dynamics.

**4.** Method according to one of the preceding claims,
**characterised in that**
symptoms are determined for a random selection of time points of the time intervals (t_akt, dti, dtj).

**5.** Method according to one of the preceding claims,
**characterised in that**
the threshold value (S_Sym) can be variably determined for determining the symptom.

**6.** Method according to claim 2,
**characterised in that**
for symptoms of a cluster the historical process variables (L, T, F, ...) of the historical time intervals that are involved in the symptoms in this cluster are also issued.

**7.** Method according to one of the preceding claims,
**characterised in that**
information from the shift log of the technical plant with the symptoms is further also issued, wherein information in a short time interval prior to and/or after the symptoms is also considered.

**8.** System for diagnosing messages (M1, M2, M3, ...) of a process control system (3) of a technical plant (1), wherein the system comprises a data memory (15), in which at least one data set characterising the operation of the plant (1) with values of process variables can be stored, and an evaluation facility (16), wherein the evaluation facility (16) is embodied to

determine diagnosis statements about the operation of the plant (1) by means of the data sets and at least one predetermined, so-called self-organising map (SOM), wherein n-tuples corresponding to the data sets with predetermined values of process variables (L, T, F, ...) for an error-free operation of the plant (1) are stored at nodes (K) of the at least one predetermined self-organising map,
**characterised in that**
the evaluation facility (16) is connected to an analysis facility, which is embodied for detecting and analysing message chains, and
the evaluation facility (16) is furthermore embodied for carrying out a method according to claim 1 following the occurrence of a message (M1),
and is embodied to issue the process variables (L, T, F, ...) that are involved in the symptoms previously determined by means of the method according to claim 1.

**9.** System according to claim 8,
**characterised in that**
the evaluation facility (16) is further embodied to carry out a clustering of the previously determined symptoms and to select that cluster that contains at least one current symptom, and to issue the process variables (L, T, F, ...) that are involved in the at least one current symptom.

**10.** System according to one of the preceding claims,
**characterised in that**
the evaluation facility (16) is further embodied to variably determine the time intervals (t_akt, dti, dtj) or set the same according to process dynamics.

**11.** System according to one of the preceding claims,
**characterised in that**
the evaluation facility (16) is further embodied to determine symptoms for a random selection of points in time of the time intervals (t_akt, dti, dtj).

**12.** System according to one of the preceding claims,
**characterised in that**
the evaluation facility (16) is further embodied so that the threshold value (S_Sym) can be variably determined for determining the symptom.

**13.** System according to one of the preceding claims,
**characterised in that**

the evaluation facility (16) is further embodied to also issue the historical process variables (L, T, F, ...) of the historical time intervals for symptoms of a cluster.

**14.** System according to one of the preceding claims,
**characterised in that**
the evaluation facility (16) is connected with a component which comprises the shift log and is connected with an analysis facility, which is embodied to evaluate information of the shift log of the technical plant in connection with the symptoms and to issue these to the evaluation facility (16).

**15.** System according to one of the preceding claims,
**characterised in that**
the evaluation facility (16) is further connected with a display device, which is embodied to display a selection of the following information: a message or calculated message chain, the occurrence frequency of the message or message chain, current and historical time intervals with a selection of process variables, process variables that are involved in historical symptoms and/or process variables that are involved in current symptoms.

**16.** Computer program with program code instructions to be executed by a computer for the implementation of the method according to one of claims 1 to 7, if the computer program is executed on a computer.

**17.** Computer program product, in particular a data carrier or storage medium, with a computer program that can be executed by a computer according to claim 16.

**Revendications**

**1.** Procédé de diagnostic de messages (M1, M2, M3, ...), qui sont produits pendant le fonctionnement d'une installation (1) technique, dans lequel on commande, au moyen d'un système (3) de conduite de processus, un processus (2) de la technique de procédé se déroulant dans l'installation (1), et on détecte, par des valeurs de variables (L, T, F, ...) de processus, des ensembles de données caractérisant le fonctionnement de l'installation (1) et on les met dans une mémoire (15) de données,
dans lequel, à l'aide des ensembles de données et d'au moins une carte (SOM) déterminée à l'avance dite d'auto-organisation, on détermine des prédictions de diagnostic sur le fonctionnement de l'installation (1), et à des noeuds (K) de la au moins une carte d'auto-organisation déterminée à l'avance on met, pour le fonctionnement sans défaut de l'installation (1), des n tuples correspondant aux ensembles de données avec des valeurs déterminées à l'avance de variables (L, T, F, ...) de processus, **caractérisé**

- **en ce qu'**après l'apparition d'un message (M1) pendant un intervalle (t_akt) de temps en cours, dans lequel le message (M1) est apparu, on détermine la distance la plus courte entre les ensembles de données de l'intervalle (t_akt) de temps en cours et les ensembles de données de tous les noeuds (K) de la carte d'auto-organisation et on choisit le noeud (Kres) correspondant,
- **en ce qu'**après l'apparition du message (M1) en outre :

on détermine un nombre i, qui caractérise combien le message est apparu souvent dans le passé,
on détermine si le message fait partie d'une chaîne (M1, M2, ...) de messages et on détermine un nombre j, qui caractérise combien la chaîne (M1, M2, ...) de messages est apparue souvent dans le passé,

- **en ce que**, pour un nombre des intervalles (dti) de temps historiques, dans lesquels le message est apparu et pour tous les intervalles (t_akt, dtj) de temps, dans lesquels la chaîne de messages est apparue, on détermine respectivement des distances les plus petites entre les ensembles de données des intervalles de temps et les ensembles de données des noeuds (K) de la carte d'auto-organisation et on sélectionne des noeuds (Kres, Kresi, Kresj) correspondants,
- **en ce que** l'on détermine des symptômes en cours et historiques en formant des différences à partir des ensembles de données des intervalles de temps aux noeuds (Kres, Kresi, Kresj) sélectionnés auparavant, dans lequel on ne tient compte que des différences de variables de processus, qui dépassent une valeur (S_Sym) de seuil donnée à l'avance, et
- **en ce que** l'on sort les variables (L, T, F, ...) de processus, qui participent aux symptômes en cours et historiques déterminés auparavant.

**2.** Procédé suivant la revendication 1,
**caractérisé**

**en ce que** l'on effectue un regroupement des symptômes,
**en ce que** l'on choisit un regroupement, qui contient au moins un symptôme en cours, et on sort les variables (L, T, F, ...) de processus, qui participent au au moins un symptôme en cours.

**3.** Procédé suivant l'une des revendications précédentes, **caractérisé**
**en ce que** les intervalles (t_akt, dti, dtj) de temps peuvent être déterminés de manière variable ou sont réglés conformément à une dynamique de processus.

**4.** Procédé suivant l'une des revendications précédentes, **caractérisé**
**en ce que**, pour une sélection quelconque d'instants des intervalles (t_akt, dti, dtj) de temps, on détermine des symptômes.

**5.** Procédé suivant l'une des revendications précédentes, **caractérisé**
**en ce que** la valeur (S_Sym) de seuil, pour la détermination du symptôme, peut être déterminée de manière variable.

**6.** Procédé suivant la revendication 2,
**caractérisé**
**en ce que**, pour des symptômes d'un regroupement, on sort également les variables (L, T, F, ...) de processus historiques des intervalles de temps historiques, qui participent aux symptômes dans ce regroupement.

**7.** Procédé suivant l'une des revendications précédentes, **caractérisé**
**en ce qu'**en outre on sort également des informations du livre d'équipe de l'installation technique avec les symptômes, dans lequel on tient compte également d'informations dans un intervalle de temps bref avant et/ou après les symptômes.

**8.** Système de diagnostic de messages (M1, M2, M3, ...) d'un système (3) de conduite de processus d'une installation (1) technique, dans lequel le système comprend une mémoire (15) de données, dans laquelle au moins un ensemble de données caractérisant le fonctionnement de l'installation (1) peut être mis en mémoire par des valeurs de variables de processus, et un dispositif (16) d'évaluation, dans lequel le dispositif (16) d'évaluation est constitué pour,

à l'aide des ensembles de données et d'au moins une carte (SOM) définie à l'avance dite d'auto-organisation, déterminer des prédictions de diagnostic sur le fonctionnement de l'installation (1), dans lequel à des noeuds (K) de la au moins une carte d'auto-organisation déterminée à l'avance des n tuples correspondant aux ensembles de données avec des valeurs déterminées à l'avance de variables (L, T, F, ...) de processus sont mis pour le fonctionnement sans défaut de l'installation (1),
**caractérisé**
**en ce que** le dispositif (16) d'évaluation est relié à un dispositif d'analyse, qui est constitué pour déterminer et analyser des chaînes de messages, et
**en ce que** le dispositif (16) d'évaluation est constitué en outre pour, après l'apparition d'un message (M1), effectuer un procédé suivant la revendication 1,
et est constitué pour sortir les variables (L, T, F, ...) de processus, qui participent aux symptômes déterminés auparavant au moyen du procédé suivant la revendication 1.

**9.** Système suivant la revendication 8,
**caractérisé**
**en ce que** le dispositif (16) d'évaluation est constitué en outre pour effectuer un regroupement des symptômes déterminés auparavant et sélectionner le regroupement, qui contient au moins un symptôme en cours, et sortir les variables (L, T, F, ...) de processus, qui participent à le au moins un symptôme en cours.

**10.** Système suivant l'une des revendications précédentes, **caractérisé**
**en ce que** le dispositif (16) d'évaluation est constitué en outre pour déterminer de manière variable des intervalles (t_akt, dti, dtj) de temps ou les régler conformément à la dynamique du processus.

**11.** Système suivant l'une des revendications précédentes, **caractérisé**
**en ce que** le dispositif (16) d'évaluation est constitué en outre pour déterminer des symptômes pour une sélection à volonté d'instants des intervalles (t_akt, dti, dtj) de temps.

12. Système suivant l'une des revendications précédentes, **caractérisé en ce que** le dispositif (16) d'évaluation est constitué en outre pour pouvoir déterminer de manière variable la valeur (S_Sym) de seuil pour la détermination du symptôme.

13. Système suivant l'une des revendications précédentes, **caractérisé en ce que** le dispositif (16) d'évaluation est constitué en outre pour sortir, pour des symptômes d'un regroupement, également les variables (L, T, F...) de processus historiques des intervalles de temps historiques.

14. Système suivant l'une des revendications précédentes, **caractérisé en ce que** le dispositif (16) d'évaluation est relié à un composant, qui comprend le livre d'équipe et est relié à un dispositif d'analyse, qui est constitué pour évaluer des informations de livre d'équipe de l'installation technique en relation avec les symptômes et les sortir sur le dispositif (16) d'évaluation.

15. Système suivant l'une des revendications précédentes, **caractérisé en ce que** le dispositif (16) d'évaluation est relié en outre à un dispositif d'affichage, qui est constitué pour afficher une sélection des informations suivantes : message ou chaîne de messages déterminé, fréquence d'apparition du message ou de la chaîne de messages, intervalle de temps en cours et historique avec sélection de variables de processus, de variables de processus, qui participent à des symptômes historiques et/ou de variables de processus, qui participent à des symptômes en cours.

16. Programme d'ordinateur, comprenant des instructions de code de programme, pouvant être exécuté par un ordinateur pour la mise en oeuvre du procédé suivant l'une des revendications 1 à 7, lorsque le programme d'ordinateur est exécuté sur un ordinateur.

17. Produit de programme d'ordinateur, en particulier support de données ou support de mémoire comprenant un programme d'ordinateur suivant la revendication 16 pouvant être exécuté par un ordinateur.

FIG 1

# FIG 2

**IN DER BESCHREIBUNG AUFGEFÜHRTE DOKUMENTE**

**In der Beschreibung aufgeführte Patentdokumente**

- EP 2696251 A2
- EP 3279756 B1
- EP 3454154 A1

**In der Beschreibung aufgeführte Nicht-Patentliteratur**

- Kommunikation und Bildverarbeitung in der Automation : Technologies for Intelligent Automation : Ausgewählte Beiträge der Jahreskolloquien KommA und BVAu 2018. Springer Berlin, 01. Januar 2018, vol. 8, 55-71